# EUROPEAN PATENT APPLICATION

(11) **EP 1 447 966 A2**
(43) Date of publication of application: **18.08.2004**
(21) Application number: 04250643.6
(22) Date of filing: 06.02.2004
(51) Int. Cl.: H04N 1/00

(54) **Printing method and apparatus using a printer identifier**

(30) Priority: 06.02.2003 KR 2003007434
(71) Applicant: Samsung Electronics Co., Ltd., Suwon-si, Gyeonggi-do 442-742 (KR)
(72) Inventor: Kim, Byoung-yue 305-502 Jugong Greenvill Apt., Gyeonggi-do (KR)
(74) Representative: Geary, Stuart Lloyd

(57) **Abstract**

In a system comprising at least one terminal 100 and one or more printers connected to a network, a printer 200 is assigned a predetermined identifier, such as a manufacturer serial number. When a printer port of a terminal 100 is configured, the printer 200 is indicated using its identifier, instead of its network address. In response to a print request for a printing operation to be performed by a specified printer 200, the computer 100 generates an address request containing the identifier of the specified printer 200 for transmission to the printers on the network. The specified printer 200 determines that its identifier matches that contained in the address request and responds by sending its network address to the computer 100. Should the network address of a printer to be altered, the identifier may remain unchanged, so that reconfiguration of the printer port is not required.

## Description

The present invention relates to a method of and apparatus for performing a printing process on a selected printer, in a system comprising one or more printers connected to a network.

A printer can be used by a computer as a local printer or as a network printer. A network printer, which is connected to a computer through a network may be commonly used by a plurality of computers. A printer port in the computer must be set up to allow data to be sent between a computer and a network printer. In order to configure the printer port, the network address of the network printer must be provided. The network address includes an Internet protocol (IP) address, a media access control (MAC) address or an internetwork packet exchange (IPX) address. An IP address consists of 32 bits and is used to identify a data transmitting source and a data receiving source during TCP/IP (transmission control protocol/Internet protocol) communication. A MAC address is a substantially unique identifier given to a physical network interface, e.g. an Ethernet card, and consists of 48 bits. IPX is a data transmission protocol which is not reliable under adverse network conditions since it does not use acknowledgment signals to report reception of packets.

During configuration of the printer port, the network address is transmitted from the network printer to the computer and is stored in the computer. When a user commands a computer to perform a printing process using a network printer, the computer transmits print data to the printer using the network address received from the printer and stored in the computer. Thereafter, the printer receives the print data and performs the printing process.

However, if the network address of the network printer is changed after the printer port has been set, the network address stored in the computer does not match the network address of the network printer. Thus, when the user requests a printing process, the computer transmits print data to the previous network address. The print data cannot be transmitted to the network printer and a print error is generated. Therefore, if the network address of the network printer changes, a user must delete the previous printer port and configure a new printer port, receiving and storing the updated network address from the network printer. This reconfiguration is inconvenient for the user.

To solve the above and/or other problems, the present invention aims to provide a method and apparatus for printing data using an identification number of a printer in which an identification number of a printer is used to identify the printer when configuring a printer port, instead of a network address.

According to a first aspect of the invention, a method of printing data on a selected printer in a system comprising one or more printers connected to a network, comprises transmitting print data to an address of the selected printer and is characterised by broadcasting a request message containing a printer identifier, receiving a response to said request and extracting a network address from said response, wherein that address to which said print data is transmitted is the extracted network address.

When a selected printer is required to perform a printing process, a request containing the identifier is sent to the one or more printers connected to the network. The selected printer responds to this request by transmitting its network address, such as an IP, MAC or IPX address. Therefore, a printer port may be configured in which a printer is identified using an identifier other than its network address. This allows the network address of a printer to be changed without requiring any reconfiguration of the printer port.

One example of a suitable identifier is the manufacturer serial number of the printer. One advantage of using the manufacturer serial number as an identifier arises from it being permanently associated with the printer, remaining unchanged.

According to a second aspect of the invention, a method of configuring a printer port on a terminal comprises receiving an identifier associated with a printer and storing said identifier, wherein the identifier is not identical to a network address of the printer.

According to a third aspect of the invention, a terminal comprises data transmitting means for sending print data to an address of a selected printer and is characterised by request signal generating means arranged to generate a request for an address of the selected printer and to transmit said request to one or more printers and address receiving means for receiving a response to the request and extracting the address of the selected printer from said response, wherein that address to which said print data is transmitted is the extracted address.

According to a fourth aspect of the invention, a printer comprises print means for receiving print data from a terminal and performing a print operation based on said print data and is characterised by address transmitting means configured to respond to an address request message by determining whether an identifier associated with the printer matches an identifier included in said address request and to transmit the address of the printer to the terminal.

The printer may further comprise identifier transmitting means arranged to transmit an identifier associated with the printer to the terminal. For example, when a printer port of the terminal is configured, the identifier transmitting means may send a message containing the identifier of the printer to the terminal for use as registration information.

The invention further provides a system comprising one or more such printers together with at least one terminal according to the third aspect of the invention.

These and/or other aspects and advantages of the invention will become apparent and more readily appreciated from the following description of the embodiments, taken in conjunction with the accompanying drawings of which:
Figure 1 is a flow chart of a method of printing data according to a first embodiment of the present invention;
Figure 2 is a flow chart showing step 12 of Figure 1 in greater detail;
Figure 3 is a block diagram illustrating an apparatus for printing data according to an embodiment of the present invention; and
Figure 4 is a block diagram illustrating an address transmitting portion of the apparatus shown in Figure 3.

Reference will now be made in detail to embodiments of the present invention, examples of which are illustrated in the accompanying drawings, wherein like reference numerals refer to the like elements throughout.

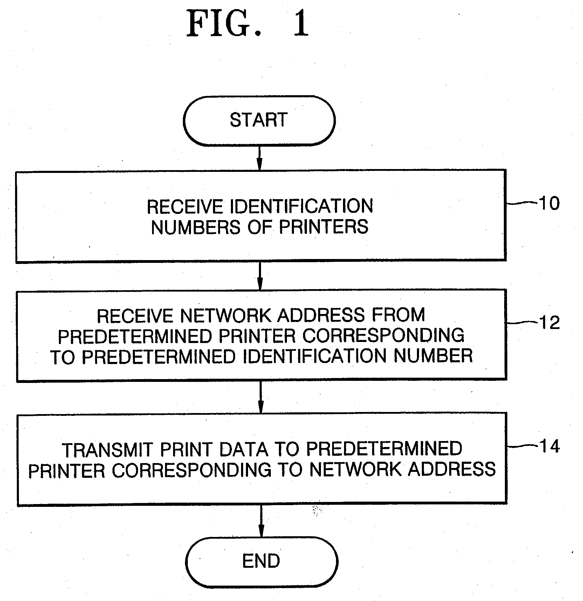

Referring to Figure 1, a method of printing data using an identifier of a printer, which, in this example, is an identification number, according to a first embodiment of the present invention is performed by receiving a network address of a specific network printer that corresponds to a predetermined identification number. Print data is then transmitted to the received network address in order to perform a printing process.

One or more printer identification numbers are received from one or more printers for use as registration information in the configuration of a printer port (operation 10). In this example, a plurality of printers are connected to a plurality of computers via a network. Printer ports are set in each of the computers. The identification number serves as an independent identifier associated with a printer and remains unchanged. For example, a printer manufacturer serial number may be used as the identification number.

In the prior art, a network address is provided by the printer as registration information of the printer port. By way of contrast, in the present embodiment, when the printer port is set, the identification number of a printer is provided instead of the network address.

Upon request of a user, a network address of the specific printer to perform a printing process is received from the printer corresponding to a predetermined identification number (operation 12).

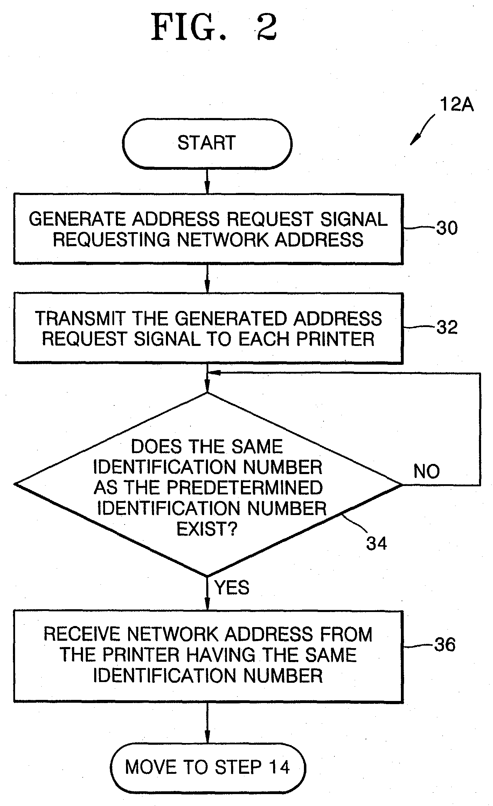

Figure 2 is a flowchart showing operation 12 of Figure 1 in more detail according to an embodiment (12A) of the present invention. Upon receipt of a print request from a user, an address request signal is generated (operation 30). The address request signal requests the network address of a printer having a predetermined identification number. The network address may be, by way of non-limiting examples, an IP address, a MAC address or IPX address.

A printer port corresponding to the selected printer has been set up with the identification number of the printer as registration information in advance. When the address request signal is generated, the identification number of the printer stored in the registration information of the printer port is included in the address request signal.

The generated address request signal is transmitted to the respective printers (operation 32). In this example, the address request signal is transmitted to all printers connected to the network.

It is then determined whether there is a match between the identification numbers of the printers and the identification number included in the address request signal (operation 34). Each printer compares the identification number included in the received request signal with its own identification number and determines whether the identification numbers match. The comparison of the identification numbers continues until the same identification number is found. If a match is found, the network address of the printer with the matching identification number is transmitted to the computer, and received in operation 36.

Print data is then transmitted to the selected printer using the received network address and printing is performed (operation 14).

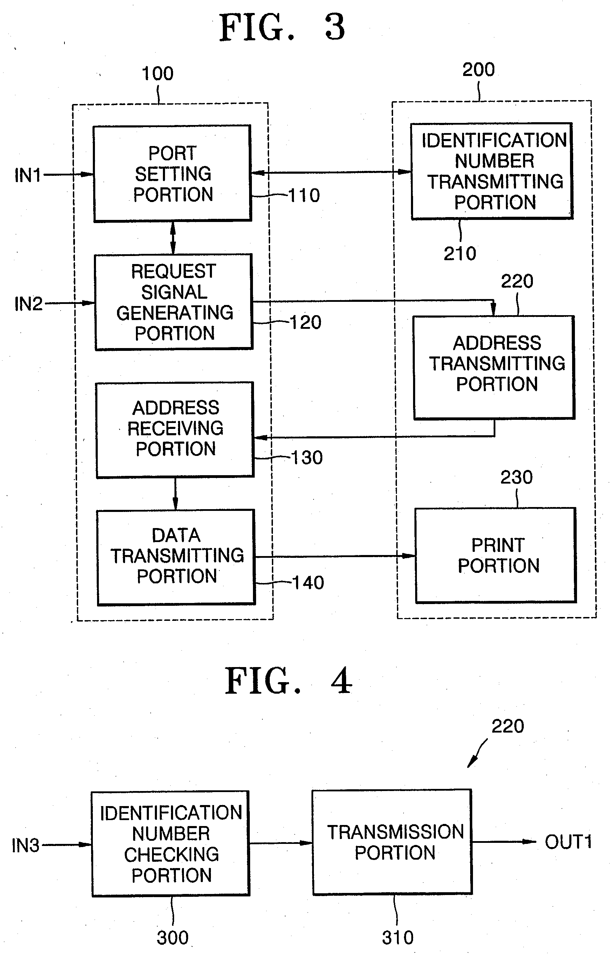

Figure 3 is a block diagram illustrating an apparatus for printing data using an identification number of a printer according to an embodiment of the invention. The apparatus includes a computer 100 and a printer 200 connected via a network. While only one computer and one printer are shown and described in Figure 3, it is to be understood that further computers and printers can be connected to the network. Such further computers and printers may have the same structures as those of the computer 100 and the printer 200.

The computer 100 includes a port setting portion 110, a request signal generating portion 120, an address receiving portion 130 and a data transmitting portion 140. The printer 200 includes an identification number transmitting portion 210, an address transmitting portion 220 and a print portion 230.

In response to a printer port configuration request received through an input port IN1, the port setting portion 110 of the computer 100 requests an identification number of the printer 200 for use as registration information. For example, the port setting portion 110 requests the identification number of the printer 200 from the identification number transmission portion 210. The identification number transmitting portion 210 receives a signal requesting an identification number from the port setting portion 110 of the computer 100 and, in response, transmits the identification number of the printer 200 to the port setting portion 110.

The identification number transmitted by the identification number transmission portion 210 is a permanent and independent identifier capable of distinguishing the printer 200 from other printers. For example, the identification number may be a manufacturer serial number of the printer 200.

The port setting portion 110 receives and stores the identification number transmitted from the identification number transmitting portion.

In response to a print request specifiying the printer 200, received through an input port IN2, the request signal generating portion 120 generates and an address request signal requesting a network address of the printer 200. The request signal generating portion 120 retrieves the predetermined identification number of the printer 200 from the registration information of the relevant printer port from the port setting portion 110 and adds it to the address request signal. The request signal generating portion 120 transmits the address request signal to the address transmitting portion 220 of the printer 200 and to other printers (not shown).

In response to the address request signal, the address transmitting portion 220 transmits the network address of the printer 200 to the address receiving portion 230 of the computer 100. The network address may be, by way of non-limiting example, an IP address, a MAC address, or an IPX address as described above. The address transmitting portion 220 provided in each printer is capable of transmitting the network address of its printer to the address receiving portion 130 of the computer 100 in response to the address request signal transmitted from the request signal generating portion 120 of the computer 100.

Figure 4 is a block diagram illustrating the address transmitting portion 220 of the printer 200. The address transmitting portion 220 includes an identification number checking portion 300 and a transmission portion 310.

The identification number checking portion 300 responds to the address request signal, which is received through an input port IN3, by comparing the identification number of the printer 200 with the identification number specified in the address request signal and outputs the result as a check signal. Each of the printers receiving the address request signal determines whether its own identification number matches the identification number included in the address request signal.

If the identification number of the printer 200 and the identification number specified in the address request signal are the same, the identification number checking portion 300 sends a positive checking result to the transmission portion 310. The transmission portion 310 then transmits the network address of the printer to the address request portion 130 of the computer 100 through an output port OUT1.

The address receiving portion 130 receives the network address and outputs the received network address to the data transmitting portion 140. The data transmitting portion 140 then transmits print data to the printer 200 corresponding to the network address received by the address receiving portion 130.

The print portion 230 receives and prints the print data according to the user's print request.

In the method and apparatus for printing data according to the above described embodiments of the present invention, when a printer port of a printer connected to a computer via a network is configured, an identification number of the printer is received instead of a network address as registration information of the printer port. Thus, even when the network address of the printer is changed, the printer port does require resetting or reconfiguration and can still be used to perform printing processes.

Although a few embodiments of the present invention have been shown and described, the present invention is not limited to the described embodiments. Rather, it would be appreciated by those skilled in the art that changes may be made in these embodiments without departing from the principles of the invention, the scope of which is defined by the claims and their equivalents.

## Claims

1. A method of printing data on a selected printer (200) in a system comprising one or more printers connected to a network, the method comprising:
transmitting print data to an address of the selected printer (200);
**characterised by**:
broadcasting a request message containing a printer identifier;
receiving a response to said request; and
extracting a network address from said response;
wherein that address to which said print data is transmitted is the extracted network address.

2. A method of configuring a printer port on a terminal (100), the method comprising:
receiving an identifier associated with a printer (200); and
storing said identifier;
**characterised in that**:
the identifier is not identical to a network address of the printer (200).

3. A terminal (100) comprising:
data transmitting means (140) for sending print data to an address of an selected printer (200);
**characterised by**:
request signal generating means (120) arranged to generate a request for an address of the selected printer (200) and to transmit said request to one or more printers; and
address receiving means (130) for receiving a response to the request and extracting the address of the selected printer (200) from said response;
wherein that address to which said print data is transmitted is the extracted address.

4. A printer, (200) comprising:
print means (230) for receiving print data from a terminal (100) and performing a print operation based on said print data;
**characterised by**:
address transmitting means (220) configured to respond to an address request message by determining whether an identifier associated with the printer (200) matches an identifier included in said address request message and to transmit a message including an address of the printer (200) to said terminal (100).

5. A system comprising at least one terminal (100) according to claim 3 and one or more printers (200) according to claim 4.

6. A method according to claim 1 or 2, a terminal (100) according to claim 3, a printer (200) according to claim 4 or a system according to claim 5, wherein said identifier is a manufacturer serial number.

7. A method of printing data using an identification number of a printer to perform a printing process through a network in which a plurality of printers are respectively connected to a plurality of computers, comprising:
receiving identification numbers of each of the printers;
receiving a network address of a selected printer corresponding to a predetermined identification number from among the received identification numbers; and
transmitting print data to the selected printer to perform the printing process.

8. The method of claim 7, wherein the receiving a network address comprising:
generating an address request signal having the predetermined identification number and requesting the network address upon a user's print request;
transmitting the address request signal to each of the printers;
determining whether one of the identification numbers is the same as the predetermined identification number; and
receiving the network address from the selected printer when the identification number is the same as the predetermined identification numbers .

9. The method as claimed in claim 7, wherein the network address is one of an Internet protocol (IP) address, an Internet packet exchange (IPX) address, and a media access control (MAC) address.

10. The method of claim 7, wherein, in the determining, each printer compares the predetermined identification number included in the transmitted address request signal to its own identification number.

11. The method of claim 7, wherein the identification numbers are printer port registration information.

12. The method of claim 1, wherein the identification numbers are printer serial numbers.

13. An apparatus for printing data using an identification number of a printer to perform a printing process through a network in which a plurality of printers are respectively connected to a plurality of computers, comprising:
a port setting portion which requests the printers to transmit identification numbers in response to a printer port set request and which stores the received identification numbers;
an identification number transmitting portion which transmits the requested identification numbers;
a request signal generating portion which generates an address request signal requesting a network address of a specific printer among the printers in response to a print request and which outputs the generated address request signal;
an address transmitting portion which transmits the network address in response to the address request signal;
an address receiving portion which the transmitted network address;
a data transmitting portion which transmits print data to the specific printer; and
a print portion which prints the transmitted print data.

14. The apparatus of claim 13, wherein the address request signal includes an identification number corresponding to the specific printer.

15. The apparatus as claimed in claim 13, wherein the address transmitting portion comprises:
an identification number checking portion checking whether an identification number of a printer having the address transmitting portion and the predetermined identification number are the same, in response to the address request signal having the predetermined identification number, and outputting the result of check as a check signal; and
a transmission portion transmitting the network address of the predetermined printer having the same identification number in response to the check signal.

16. The apparatus of claim 13, wherein the network address is one of an Internet protocol (IP) address, an Internet packet exchange (IPX) address, and a media access control (MAC) address.

17. The apparatus of claim 13, wherein the identification numbers are printer port registration information.

18. The apparatus of claim 13, wherein the identification numbers are printer serial numbers.

19. A method of printing data over a network, comprising:
determining a corresponding printer by generating an address request signal which includes specifying identification information,
transmitting the address requesting signal to printers connected to the network,
checking whether the specifying identification information matches printer identification information of a printer connected to the network, a printer having printer identification information which matches the specifying identification information being the corresponding printer; and
transmitting print data to the corresponding printer.

20. The method of claim 19, wherein, in the determining, each printer compares the predetermined identification number included in the transmitted address request signal to its own identification number.
